Europäisches Patentamt

European Patent Office

Office européen des brevets

(11) Publication number: **0 335 216**
**A1**

## EUROPEAN PATENT APPLICATION

(21) Application number: **89104958.7**

(22) Date of filing: **20.03.89**

(51) Int. Cl.⁴ **F27B 9/30** , **F27B 9/24** ,
**F16D 1/10**

(30) Priority: **31.03.88 IT 2006888**

(43) Date of publication of application:
**04.10.89 Bulletin 89/40**

(84) Designated Contracting States:
**DE ES FR GB IT**

(71) Applicant: **Società Impianti Termoelettrici
Industriali s.p.A. S.I.T.I.**
**Via Sempione 82**
**I-28040 Marano Ticino(IT)**

(72) Inventor: **Bossetti, Renato**
**Viale Kennedy 27**
**I-28100 Novara(IT)**

(74) Representative: **Garrone, Fernando**
**Internazionale Brevetti s.r.l. Via Brentano 2**
**I-20121 Milano(IT)**

(54) **Supporting and actuation device for rollers particularly of an oven for cooking ceramic materials.**

(57) Supporting and rotary-actuation device for each roller of a plurality of rollers forming a conveyor surface, particularly of an oven for cooking ceramic materials comprising a supportine element (2) for a rotatable connecting element (3) adapted to couple to a roller (41) and rotate it. The supporting element (2) is rigidly fixed to a supporting structure for a plurality of rollers. The connecting element is constituted by a shaft (8), the central portion whereof is supported by the above mentioned supporting element (2). A self-centering coupling element (9) is fixed to the shaft (8) end nearest to the roller (4) and is adapted to engage with an end portion of the roller (4), while an element for transmitting rotary motion (10) is keyed to the opposite end of the shaft (8).

Fig. 1

## SUPPORTING AND ACTUATION DEVICE FOR ROLLERS, PARTICULARLY OF AN OVEN FOR COOKING CERAMIC MATERIALS

The present invention relates to a supporting and actuation device for rollers, particularly of an oven for cooking ceramic materials.

Various devices for supporting the rollers of a cooking oven are known. In particular, a supporting system is known which is described in the Italian industrial model patent No. 189160 filed on 11.17.1982 in the name of the same Applicant. Said roller supporting system comprises a connecting element associable with a roller and fixed to a multiple supporting structure with a bearing interposed.

Said bearing is connected to the supporting structure with elastic means which allow it to oscillate within certain limits in order to allow the operator to perform a visual inspection in case of possible malfunctions involving the rollers.

In said known systems, the rotary motion of the connecting element cannot be transmitted by means of ordinary gears with involute toothing, indeed due to the elasticity of the supporting bearing of said element, and it is therefore necessary to use a toothed-wheel with epicycloidal toothing actuated by a chain, which is very complicated and expensive to manufacture.

A disadvantage common to known supporting devices arises from the fact that the tolerance of the outer diameter of the rollers available on the market, which are normally made of highly refractory ceramic material, is of a few tenths of a millimeter, and that said rollers can have local deformations and errors in circularity. Therefore, in order to provide a correct coupling between the roller and the connecting element it is necessary to grind the end portion of the roller to adapt the outer diameter of said roller to the inner diameter of said connecting element. This operation is considerably expensive, especially in view of the fact that it must be carried out on a considerable number of rollers which normally totals approximately two thousand in an oven.

In order to avoid this expensive machining, a cylindrical element can be used for connecting to the roller; said element has an approximately increased inner diameter to allow the insertion of the end portion of the roller with a certain margin of tolerance. In these conditions a radial play of variable extent occurs between the roller and cylindrical connecting element, with a substantially linear contact between the coupled parts. The rotary actuation of the roller is therefore performed by retention elements, normally of the type with small actuation springs extending radially towards the inside of the cylindrical connecting element. During rotation, however, the roller is periodically raised by a few tenths of a millimeter as an effect of the contrast action of the springs, and "falls" immediately thereafter to re-establish a linear contact inside the cylindrical connecting element, thus slightly but sharply lowering the roller. The consequent periodic jumping produces local folds and/or damage to the products being processed, in particular to tiles of ceramic material in the plastic state, degrading the final quality of said products. As an effect of this jumping, the rollers, too, are subject to periodic "stresses" which may bend them and consequently cause the material to advance in the oven with a undulating motion and with possible overlaps.

The aim of the present invention is to obviate the disadvantages described above by providing a supporting device which uses simple and economically advantageous motion transmission elements.

Within the scope of the above described aim, a particular object of the present invention is to provide a supporting device which allows to use commercially available rollers without having to machine them again beforehand.

A further object of the present invention is to provide a supporting device which adapts to the outer configuration of the rollers, providing an absolutely effective coupling.

Not least object of the present invention is to provide a supporting and actuation device for rollers having a simple structure which can be easily inspected from the outside.

This aim, as well as these and other objects which will become apparent hereinafter, are achieved by a supporting and rotary-actuation device for each roller of a plurality of rollers forming a conveyor surface, in particular of an oven for cooking ceramic materials, comprising a supporting element for a rotatable connecting element which can be coupled to said roller to rotate said roller, said supporting element being rigidly fixed to a supporting structure for a plurality of said supporting elements corresponding to said rollers, characterised in that said connecting element comprises a shaft, the central portion of said shaft being rotatably supported by said supporting element, a self-centering coupling element being associated with the end of said shaft directed towards said roller, said coupling element being furthermore engageable with an end portion of said roller, an element for transmitting rotary motion being keyed to the opposite end of said shaft.

Further characteristics and advantages will become apparent from the description of a preferred but not exclusive embodiment of a supporting and actuation device for rollers, illustrated only by way of non-limitative example in the accompanying drawings, wherein:

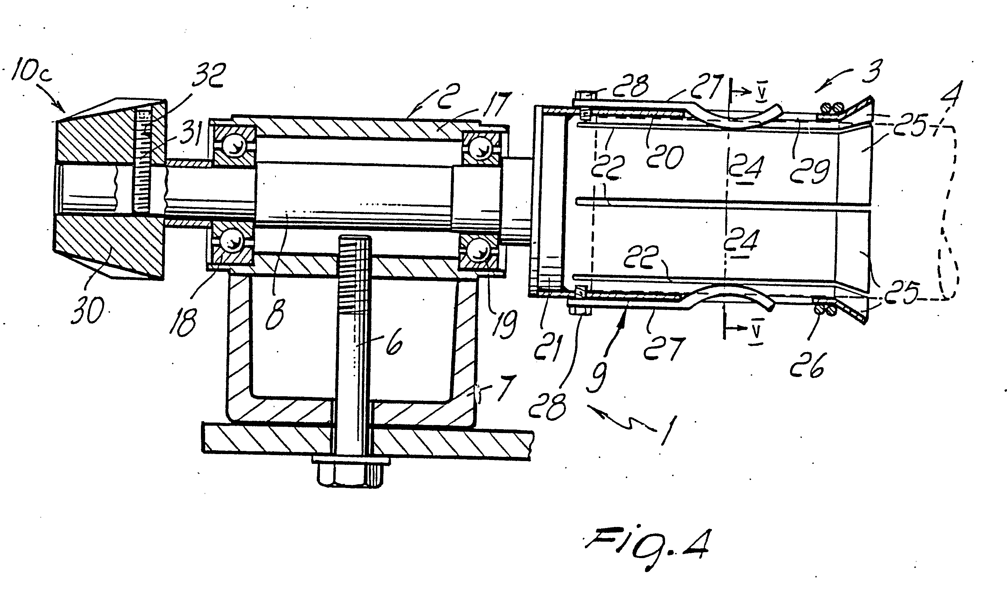

figures 1, 2 and 3 are schematic side views of a supporting device according to the invention, with three different types of rotary-motion transmission elements;

figure 4 is a partially sectional and enlarged-scale side view of the connecting element in the preferred embodiment illustrated in figure 3;

figure 5 is a sectional view of the connecting element of figure 4 taken along the line V-V.

With reference to the above described figures, the device according to the invention, generally indicated by the reference numeral 1, comprises a supporting element 2 which rotatably supports a connecting element, generally indicated by the reference numeral 3, adapted to accommodate a roller 4 and rotate it about its axis. Said roller belongs to a plurality of rollers arranged in a substantially transverse position with respect to the longitudinal extension of the oven to advance the material along the oven's feed channel. The supporting element 2 is rigidly connected to a supporting structure, for example by means of a screw 6; said supporting structure supports all the supporting elements of said plurality of rollers. Said structure is preferably constituted by a profiled element 7 with a U-shaped cross section which has, at its top, a plurality of semicircular seats which are mutually spaced by an amount equivalent to the pitch of the rollers, so as to accommodate the individual supporting elements 2.

A first characteristic of the present invention resides in that the connecting element 3 comprises a shaft 8 which rotatably rests with its central portion on the supporting element 2.

A coupling element 9 is rigidly mounted on the end of the shaft 8 nearest to the roller 4 and is adapted to engage with an end portion of the roller 4, while a rotary-motion transmission element is keyed to the opposite end of the shaft 8.

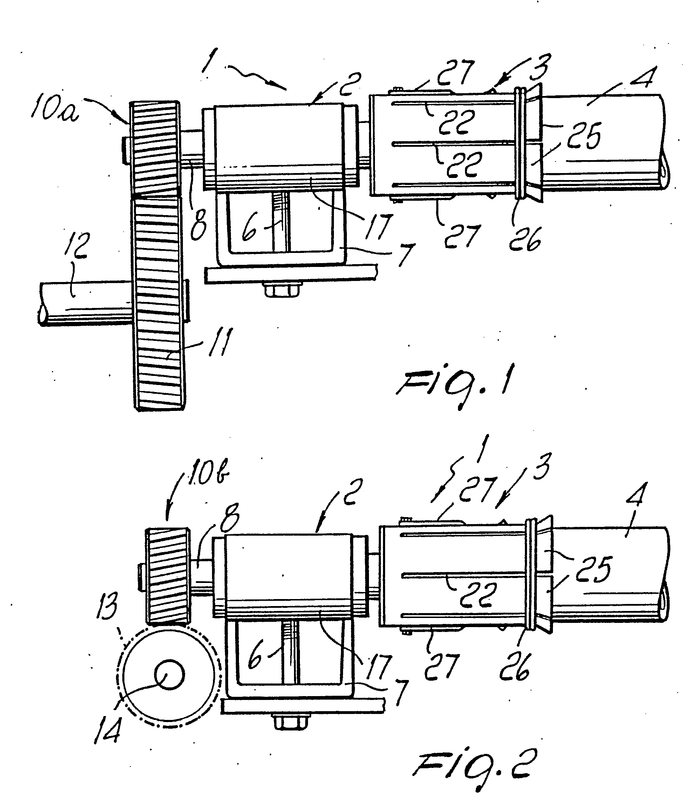

In a first embodiment of the device, illustrated in figure 1, the motion transmission element is conveniently constituted by a gear 10a with a cylindrical teeth, kinematically connected to a toothed wheel 11 which has an axis of rotation 10 substantially parallel to the shaft 8. In this embodiment, the gears 10a and the toothed wheels 11, having parallel and equally spaced rotation axis, form a kinematic chain in which the motor element can be constituted by a single wheel 11.

In a second embodiment of the invention, illustrated in figure 2, the motion transmission element is advantageously constituted by a gear 10b with helical teeth, kinematically connected to a toothed wheel 13, the axis of rotation whereof 14 is substantially perpendicular and spaced with respect to the shaft 8. In this embodiment, every gear 10b of the different connecting elements 3 receives its motion from a respective toothed wheel 13, and the different toothed wheels 13 are keyed to a single motor shaft with axis of rotation 14.

In a third preferred embodiment, according to the invention the motion transmission element is advantageously constituted by a bevel gear 10c kinematically connected to a toothed wheel 15 with an axis of rotation 16 which intersects in a substantially perpendicular manner the axis of rotation of the shaft 8. This last embodiment of the device is preferred, due to the high efficiency of the bevel gear pair and to the particularly simple structure of the kinematic chain linking the various connecting elements.

All of the three embodiments described above have the advantage of using motion transmission elements constituted by modular gears commonly available on the market, without having to resort to an expensive solution such as the one represented by epicycloidal toothed wheels meshing with a chain, which requires a particular design and execution.

It can be seen that the use of said modular gears is allowed by a fact that a supporting element rigidly fixed to the supporting structure is used.

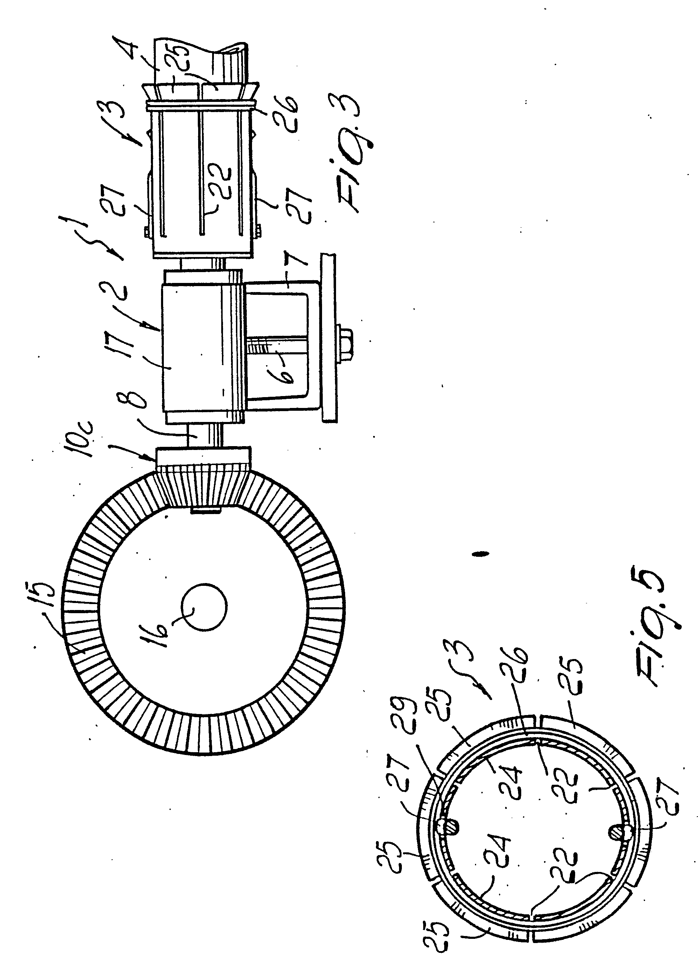

With reference to figure 4, the supporting element 2 is constituted by a bush 17; two bearings 18, 19 are inserted in the opposite end portions of said bush.

Said bearings support the shaft 8 with their inner rings and allow it to rotate about its axis. A coupling element 9 is provided at the shaft end nearest to the roller 4 and is constituted by a cylindrical portion 20 rigidly connected to the shaft 8, by welding on an end flange 21 so that the axis of the cylindrical element 20 coincides with the axis of rotation of the shaft 8.

According to the invention, the cylindrical element 20 conveniently has a plurality of longitudinal notches 22 extending substantially parallel to its axis and arranged in mutually angularly equidistant positions. The notches 22 are provided starting from the circumferential end edge 23 of the cylindrical element and extend for most of its length, so as to define a plurality of flexible cylindrical segments 24 mutually joined proximate to the end flange 21.

Proximate to the free end of the cylindrical element, each of the cylindrical segments 24 advantageously defines an end edge 25 which is outwardly flared so as to form altogether a conical guiding region for the insertion of the roller 4.

In this manner the insertion of a roller in the cylindrical coupling portion 20 is facilitated by the presence of the flared edges of the cylindrical segments 24 which self-center and adapt to the shape of said roller by virtue of their flexibility, compensating any variations in the outer diameter of the roller and/or possible circularity and/or axiality errors thereof.

In order to further improve the coupling between the cylindrical portion 20 and the corresponding end portion of the roller 4, a contrast element acts radially on the cylindrical elements 24 towards the axis of rotation.

According to the invention, said contrast element is preferably constituted by a helical spring 26 arranged outside the cylindrical portion 20 proximate to the flared end edge of the cylindrical segments 24. The helical spring 26 forces the cylindrical segments 24 to adhere to the outer surface of the roller, substantially eliminating the play between the coupled surfaces and ensuring a substantially continuous surface contact, so as to avoid irregularities in operation.

The connecting element 3 actuates the roller 4 by means of one or more per se known retention elements, constituted, in the illustrated embodiment, by a pair of elastic keys or springs 27 fixed in diametrically opposite positions on the outer wall of the cylindrical portion 20 by means of connecting screws 28. Said springs 27 have a substantially semicircular end portion adapted to engage with a pair of complementary shaped cavities provided on the outer wall of the roller 4, and are obtained from a steel wire of adequate cross section, flattened towards the end intended to be fixed on the cylindrical portion 20.

The springs 27 conveniently protrude towards the inside of the cylindrical element 20 through longitudinal slot-like openings 29.

A bevel gear 30 is keyed to the opposite end of the shaft 8 and is fixed to the shaft by means of a fixing dowel 31 inserted in a diametrical hole 32 which traverses the gear 30 and the shaft 8.

From what has been described the operation of the device according to the invention is evident.

In order to insert the roller 4 in the connecting element 3, the end portion of the roller is placed at the inlet of the cylindrical element 20. The end portion of the roller 4 is guided by the flared edges 25 of the cylindrical segments 24 which facilitate the insertion of the roller in the cylindrical element. If the roller is advanced axially towards the end flange 21, it self-centers with respect to the cylindrical segments 24; the springs 27 engage in the corresponding cavities provided on the surface of the roller 4 when the end of said roller is at a certain distance from the end flange 21. As mentioned, the helical spring 26 forces the cylindrical segments 24 against the outer surface of the roller 4, even during the rotation of the connecting element 3, regardless of the position of the actuation springs 27.

In practice it has been observed that the device according to the invention fully achieves the intended aim, in that it uses simple and economical motion transmission elements and provides a self-centering coupling which perfectly adapts to the outer configuration of the rollers, compensating any axiality defects or variations in the outer diameter of the rollers and thus avoiding their further machining.

The present device furthermore achieves the object of preventing sharp lowerings of the roller during its rotation, avoiding damage to the tiles during their advancement on the rollers and avoiding abnormal periodic and cyclic stresses on the rollers during their rotation.

The device according to the invention is furthermore simple to manufacture and assemble and allows complete access and easy maintenance.

The device thus conceived is susceptible to numerous modifications and variations, all of which are within the scope of the inventive concept.

All the details may furthermore be replaced with technically equivalent elements.

In practice, the materials employed, so long as compatible with the specified use, as well as the dimensions, may be any according to the requirements and to the state of the art.

**Claims**

1. Supporting and rotary-actuation device for each roller of a plurality of rollers forming a conveyor surface, particularly of an oven for cooking ceramic materials, comprising a supporting element for a rotatable connecting element associable with said roller so as to rotate it, said supporting element being rigidly fixed to a supporting structure for a plurality of said supporting elements corresponding to said plurality of rollers, characterized in that said connecting element comprises a shaft, the central portion of said shaft being rotatably supported by said supporting element, a self-centering coupling element being associated with the end of said shaft directed towards said roller, said coupling element being furthermore engageable with an end portion of said roller, an element for transmitting rotary motion being keyed to the opposite end of said shaft.

2. Device according to claim 1, characterized in that said motion transmission element is constituted by a gear with cylindrical teeth, kinematically connected to a toothed wheel the axis of rotation whereof is substantially parallel to said shaft.

3. Device according to claim 1, characterized in that said motion transmission element is constituted by a gear with helical teeth, kinematically connected to a toothed wheel the axis of rotation whereof is substantially perpendicular and spaced with respect to said shaft.

4. Device according to claim 1, characterized in that said motion transmission element is constituted by a bevel gear kinematically connected to a toothed wheel the axis whereof intersects the axis of said shaft in a substantially perpendicular manner.

5. Device according to one or more of the preceding claims, characterized in that said central portion of said shaft is rotatably supported by said self-centering supported element, with at least one bearing interposed.

6. Device according to one or more of the preceding claims, characterized in that said self-centering coupling element comprises a cylindrical portion adapted to internally accommodate said end portion of said roller, said cylindrical portion being rigidly coupled to said shaft with an end flange in a substantially coaxial position with respect to said shaft.

7. Device according to one or more of the preceding claims, characterized in that said cylindrical portion has a plurality of longitudinal notches extending in a direction substantially parallel to its axis and arranged in mutually angularly equidistant positions, said notches extending for most of the length of said cylindrical portion starting from its free end opposite to said end flange, so as to define a plurality of flexible cylindrical segments joined to one another proximate to said end flange.

8. Device according to one or more of the preceding claims, characterized in that proximate to said free end said cylindrical segments define an outwardly flared end edge, said end edges forming altogether a conical guide for the insertion of said roller.

9. Device according to one or more of the preceding claims, characterized in that said cylindrical portion supports a contrast element acting radially on said cylindrical elements toward the center of said portion.

10. Device according to one or more of the preceding claims, characterize in that said contrast element is constituted by a helical spring arranged outside said cylindrical portion proximate to said flared end edge of said cylindrical segments.

11. Device according to one or more of the preceding claims, characterized in that said cylindrical portion comprises at least one per se known retention element inserted in a longitudinal opening of said cylindrical portion and elastically engageable snap-together with a corresponding cavity provided on said end portion of said roller.

12. Supporting and actuation device for rollers, particularly of a ceramic-material cooking oven, characterized by one or more of the described and/or illustrated characteristics.

Fig.1

Fig.2

Fig.4

Fig.3

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 470 350 (K.A. HEIMSOTH) * Claims; figures * --- | 1,5,12 | F 27 B 9/30 F 27 B 9/24 F 16 D 1/10 |
| X | DE-A-3 244 773 (CARFER) * Claims; figures * --- | 1,5,12 | |
| X | DE-A-3 434 058 (R. KLEFISCH) * Claims; figures * --- | 1,2,5, 12 | |
| A | US-A-3 038 322 (W.C. WILSON) * Whole document * ----- | 6-12 | |

TECHNICAL FIELDS SEARCHED (Int. Cl.4)

F 27 B
F 16 D

The present search report has been drawn up for all claims

| Place of search | Date of completion of the search | Examiner |
|---|---|---|
| THE HAGUE | 07-06-1989 | COULOMB J.C. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P0401)